# EUROPEAN PATENT APPLICATION

(11) **EP 1 916 223 A1**
(43) Date of publication of application: **30.04.2008**
(21) Application number: 07119133.2
(22) Date of filing: 24.10.2007
(51) Int. Cl.: C01B 31/02, H01J 1/304

(54) **Method of preparing a carbonaceous material for an emitter of an electron emission device**

(30) Priority: 24.10.2006 RU 2006137605; 12.12.2006 KR 20060126401
(71) Applicant: Samsung SDI Co., Ltd., Suwon-si Gyeonggi-do (KR); Loffe Physico- Technical Institute of Russian Academy of Sciences, Saint-Petersburg 194021 (RU)
(72) Inventor: Kim, Yoon-Jin, Gyeonggi-do (KR); Zang, Dong-Sik, Gyeonggi-do (KR); Kim, Jae-Myung, Gyeonggi-do (KR); Moon, Hee-Sung, Gyeonggi-do (KR); Garifovich, Gabdullin Pavel, 191126, St. Petersburg (RU); Nikolayevich, Davydov Sergey, 194064, St. Petersburg (RU); Vasilyevich, Korablev Vadim, 195274, St. Petersburg (RU); Efimovich, Kravchik Alexander, 198259, St. Petersburg (RU); Vasilyevich, Sokolov Vasily, 198096, St. Petersburg (RU); Alecandrovna, Kukushkina Yulia, 195027, St. Petersburg (RU); Fedorovich, Tereshchenko Gennady, 117218, Moscow (RU)
(74) Representative: Hengelhaupt, Jürgen

(57) **Abstract**

Provided are carbide derived carbon materials prepared by thermochemically reacting carbide compounds and a halogen containing gas and extracting all atoms of the carbide compounds except carbon atoms, wherein the intensity ratios of the graphite G band at 1590 cm⁻¹ to the disordered-induced D band at 1350 cm-1 are in the range of 0.3 through 5 when the carbide derived carbon is analyzed using Raman peak analysis, wherein the BET surface area of the carbide derived carbon is 1000 m²/g or more, wherein a weak peak or wide single peak of the graphite (002) surface is seen at 2θ = 25° when the carbide derived carbon is analyzed using X-ray diffractometry, and wherein the electron diffraction pattern of the carbide derived carbon is the halo pattern typical of amorphous carbon when the carbide derived carbon is analyzed using electron microscopy.

## Description

### BACKGROUND OF THE INVENTION

### 1. Field of the Invention

Aspects of the present invention relate to carbide derived carbon (carbide derived carbonaceous material) and its preparation method, an emitter for cold cathodes including the carbide derived carbon and an electron emission device including the emitter. More particularly, to carbide derived carbon can be prepared using a more inexpensive method than that used to manufacture conventional carbon nanotubes. The carbide derived carbon of the present invention has good uniformity and emitters prepared with the carbide derived carbon have a long lifetime.

### 2. Description of the Related Art

In general, electron emission devices can be classified into electron emission devices using hot cathodes as an electron emission source and electron emission devices using cold cathodes as an electron emission source. Examples of electron emission devices using cold cathodes as an electron emission source include field emitter array (FEA) type electron emission devices, surface conduction emitter (SCE) type electron emission devices, metal insulator metal (MIM) type electron emission devices, metal insulator semiconductor (MIS) type electron emission devices, ballistic electron surface emitting (BSE) type electron emission devices, etc.

FEA type electron emission devices operate based on a principle that a low work function material or high beta function material as an electron emission source easily emits electrons because of an electric field formed between two or more electrodes under a vacuum condition. Recently, a tip-shaped structure mainly formed of Mo, Si, etc.; a carbonaceous material, such as graphite, diamond like carbon (DLC), or the like; and a nanomaterial, such as nanotubes, nano wires, or the like have been developed as electron emission sources for FEA type electron emission devices.

In an SCE type electron emission device, a first electrode on a first substrate faces a second electrode on the first substrate, and a conductive thin film having fine cracks is located between the first and second electrodes. These fine cracks are used as an electron emission source. In this structure, when a voltage is applied to the device, current flows in the surface of the conductive thin film and electrons are emitted through the fine cracks acting as an electron emission source.

MIM type electron emission devices and MIS type electron emission devices include an electron emission source having a metal-dielectric layer-metal (MIM) structure and an electron emission source having a metal-dielectric layer-semiconductor (MIS) structure, respectively. These devices operate based on a principle that when a voltage is applied between metals or between a metal and a semiconductor separated by a dielectric layer, electrons move, are accelerated and are emitted from the metal or semiconductor having higher electron electric charge to the metal having lower electron electric charge.

BSE type electron emission devices operate based on a principle that when a semiconductor is miniaturized to a dimension smaller than the mean free path of electrons of the semiconductor, electrons travel without being dispersed. In particular, an electron supply layer formed of a metal or semiconductor is formed on an ohmic electrode, an insulating layer and a thin metal film are formed on the electron supply layer, and a voltage is applied to the ohmic electrode and the thin metal film to emit electrons.

In addition, FEA type electron emission devices can be categorized into top gate type electron emission devices and under gate type electron emission devices according to the locations of cathodes and gate electrodes. Furthermore, according to the number of electrodes used, FEA type electron emission devices can be categorized into diode electron emission devices, triode electron emission devices, tetrode electron emission devices, etc.

In the electron emission devices described above, carbon-based materials included in an emitter, for example, carbon nanotubes, which have good conductivity, electric field concentration, electric emission properties and a low work function are commonly used.

However, the field enhancement factor, β, of the common fiber type carbon nanotube is great. Fiber type carbon nanotube materials have many problems such as bad uniformity, a short lifetime, and the like. When fiber type carbon nanotubes are manufactured using paste, ink, slurry, or the like, manufacturing problems occur compared with other materials in particle form. In addition, the raw materials are too expensive.

### SUMMARY OF THE INVENTION

The present invention among others provides a carbide derived carbon (or carbonaceous material) that can be prepared using a more inexpensive method than that used to manufacture conventional carbon nanotubes where the nanotubes have good uniformity and a long lifetime with respect to the use in an emitter for cold cathodes.

According to one aspect of the invention, there is provided a method of preparing carbide derived carbon for an emitter of an electron emission device. The method comprises the steps of:
providing a carbide material in a reactor; and
feeding a halogen containing gas into the reactor and thereby thermochemically reacting the carbide material with the halogen containing gas to extract all the atoms of the carbide material except carbon atoms until
   (i) in Raman peak analysis the intensity ratio of a graphite G band at 1590 cm⁻¹ to a disordered-induced D band at 1350 cm⁻¹ of the carbide derived carbon is in the range of 0.3 through 5; and/or
   (ii) a surface area of the carbide derived carbon analyzed by the BET method is 1000 m²/g or more; and /or
   (iii) in X-ray diffractometry a carbon crystal structure of the carbide derived carbon has a weak peak or wide single peak of a graphite (002) surface at 2θ = 25°; and/or
   (iv) in electron microscopy an electron diffraction pattern of the carbide derived carbon is a halo pattern of amorphous carbon.

Preferably, feeding the halogen containing gas into the reactor and thereby thermochemically reacting the carbide material with the halogen containing gas to extract all the atoms of the carbide material except carbon atoms is maintained until the carbide derived carbon shows all of the features of items (i) to (iv).

Preferably, the carbide material is a carbide compound of group II, III, IV, V, or VI elements.

The carbide material may be at least one compound selected from the group consisting of silicon carbide, boron carbide, titanium carbide, zirconium carbide, aluminium carbide, calcium carbide, titanium tantalum carbide, molybdenum tungsten carbide, titanium nitride carbide and zirconium nitride carbide.

The halogen containing gas may preferably be Cl₂, TiCl₄ or F₂.

According to another aspect of the invention, there is provided a carbide derived carbon produced by the before mentioned method.

According to another aspect of the invention, there is provided an emitter for cold cathodes of an electron emission device made of the before mentioned carbide derived carbon.

According to another aspect of the invention, there is provided an electron emission device comprising the before mentioned emitter. Preferably, the electron emission device is a field emitter array (FEA) type electron emission device.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a view illustrating the conventional nano structure of amorphous carbon;
FIG. 2 is a graph of a Raman peak analysis result of carbide derived carbon according to an embodiment of the present invention;
FIGs. 3 and 4 are graphs of X-ray diffractometry results of carbide derived carbon according to embodiments of the present invention;
FIG. 5 is a view of the crystal structure of graphite, according to an embodiment of the present invention;
FIG. 6 is a graph of X-ray diffractometry results of conventional crystalline graphite;
FIG. 7 is a transmitting electron microscope (TEM) image of carbide derived carbon according to an embodiment of the present invention;
FIG. 8 is a partial cross-sectional view illustrating an electron emission device according to an embodiment of the present invention;
FIG. 9 is a graph of current densities as a function of electric field for carbide derived carbon according to embodiments of the present invention;
FIGs. 10 and 11 are TEM images of carbide derived carbon obtained from synthesized Al₄C₃ according to another embodiment of the present invention; and
FIG. 12 is a TEM image of carbide derived carbon obtained from synthesized B₄C according to another embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

The carbide derived carbonaceous material of the invention has reduced manufacturing costs and good electron emission properties.

The carbide derived carbonaceous material is be prepared using a method in which carbide compounds are thermochemically reacted with halogen containing gases to extract atoms of the carbide compounds except carbon atoms. The carbide derived carbon may be prepared using a method including: i) forming workpieces comprised of particles of carbide compounds and providing the workpieces in a reactor, and ii) thermochemically treating the workpieces with halogen containing gases at a temperature in the range of 350 through 1200 ° C to extract atoms of the workpieces except carbon atoms. The carbide derived carbon has a nano porosity throughout the workpieces.

When the carbide derived carbon prepared using the above method is analyzed using Raman peaks, it has intensity ratios of a graphite G band of 1590 cm⁻¹ to a disordered-induced D band at 1350 cm⁻¹ in the range of 0.3 through 5, or a BET surface area of 1000 m²/g or more. When the carbide derived carbon is analyzed using X-ray diffractometry, a weak or wide peak of a graphite (002) surface can be seen at 2θ = 25°. When the carbide derived carbon is analyzed using electron microscopy, the electron diffraction pattern is the halo pattern typical of amorphous carbon.

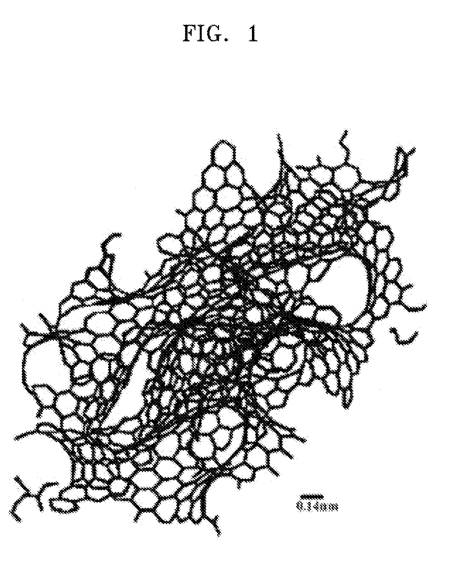

Generally, results of analysis of the Raman peaks, X-ray diffractometry and electron microscopy are commonly used as criteria of degrees of crystallinity. It can be seen that the carbide derived carbon according to the present invention has a structure that has a degree of crystallinity within the short ranges relevant to these embodiments that are similar to those of amorphous carbon analyzed by the same techniques. It has been documented that amorphous carbon having a degree of crystallinity in short range order has a structure where bent graphite sheets and open pores that are not in the shape of the 6-membered rings that surround the pores are mixed (Enn Lust, et al., J. Electroanalytical Chem., vol. 586, p 247, 2006). FIG. 1 is a view illustrating the nano structure of amorphous carbon as disclosed in the above reference. Carbide derived carbon having the structure as illustrated in FIG. 1 has good electron emission properties, and emits electrons from the open pores which have structures that are not in the shape of the 6-membered rings that surround the pores and are perpendicular to the surface of the carbide derived carbon.

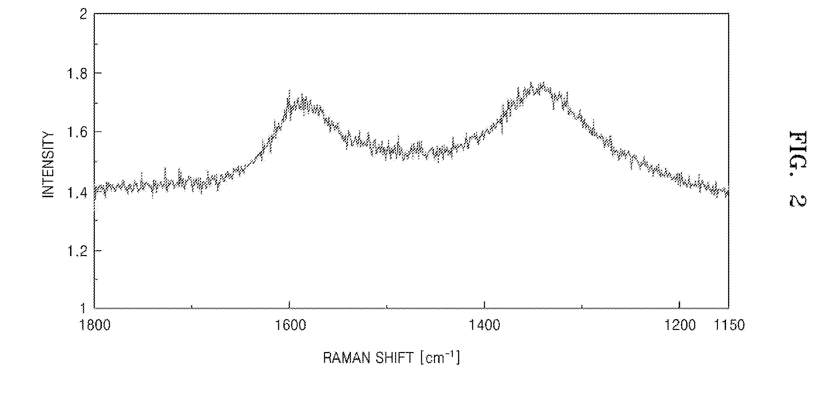

FIG. 2 is a graph of a Raman peak analysis for the carbide derived carbon prepared according to the present invention (analyzed at 514.5 nm, 2 mW, 60 sec (2 times), 50 x). Referring to FIG. 2, since the carbide derived carbon has an intensity of the disordered-induced D band of 1.75 at 1350 cm⁻¹, and an intensity of the graphite G band of 1.70 at 1590cm⁻¹, it can be seen that the ratio of the intensity of the graphite G band to the intensity of the disordered-induced D band I_{G}/I_{D} is 0.97.

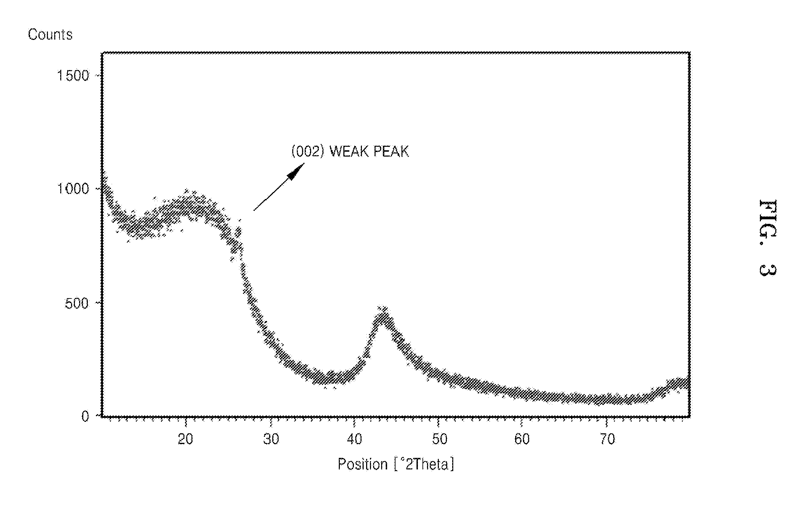

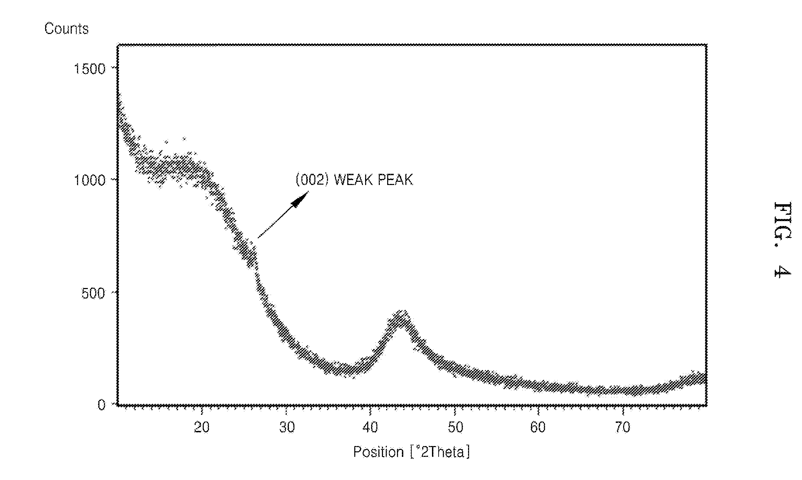

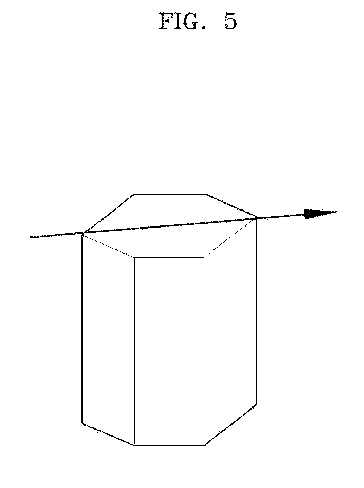

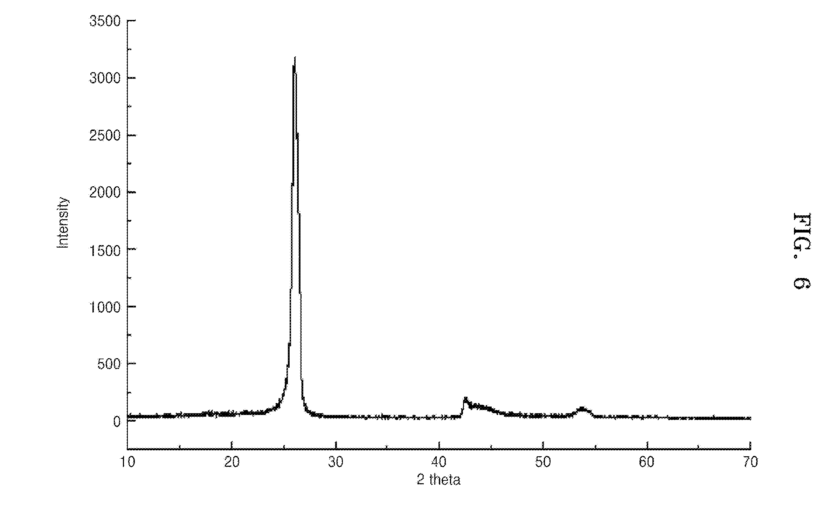

FIGS. 3 and 4 are graphs of X-ray diffractometry for the carbide derived carbon prepared according to the present invention. Referring to FIGS. 3 and 4, in the carbide derived carbon, a weak peak of a graphite (002) surface can be seen at 2θ = 25°. When the crystal structure of graphite is a hexagonal pillar as illustrated in FIG. 5, the peak of the graphite (002) surface is a peak generated by X-ray diffraction emitted in parallel with the upper surface of the hexagonal pillar. FIG. 6 is a graph of an X-ray diffractometry analysis of conventional crystalline graphite. Referring to FIG. 6, a very strong peak of the conventional crystalline graphite can be seen at 2θ = 25°. However, referring to FIGS. 3 and 4 a very weak peak of the carbide derived carbon according to the present invention can be seen at 2θ = 25°. Accordingly, the carbide derived carbon according to the present invention has a different, amorphous, property unlike conventional crystalline graphite.

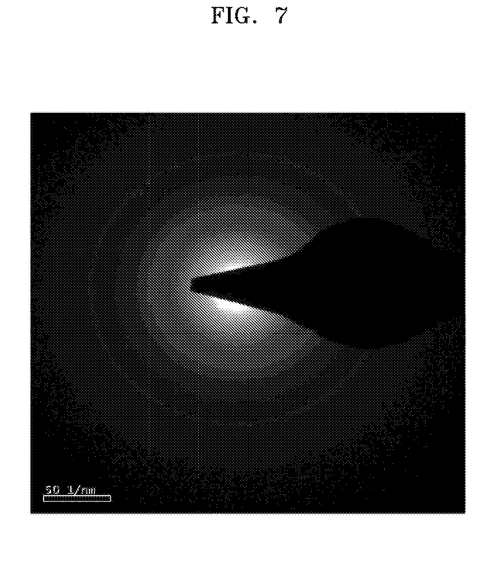

FIG. 7 is a transmitting electron microscope (TEM) image of the carbide derived carbon prepared according to the present invention. Referring to FIG. 7, the electron diffraction pattern of the carbide derived carbon is a halo-pattern. In an electron diffraction pattern of crystalline carbon, pluralities of spots are scattered. However, the electron diffraction pattern of the carbide derived carbon according to the present invention illustrated in FIG. 7 is a halo pattern, which is a nearly round oval, rather than the plurality of spots. Accordingly, the carbide derived carbon according to the present invention has different, amorphous, properties, unlike crystalline carbon.

A composition for preparing an emitter according to an embodiment of the present invention may be a carbide compound of group II, III, IV, V, or VI elements, respectively, and preferably, may be diamond type carbides such as silicon carbide or boron carbide; metal type carbides such as titanium carbide or zirconium carbide; alkaline metal type carbides such as aluminum carbide or calcium carbide; complex carbides such as titanium tantalum carbide or molybdenum tungsten carbide; carbonitrides such as titanium nitride carbide or zirconium nitride carbide; or compounds thereof. The halogen containing gas may be Cl₂, TiCl₄ or F₂.

In addition, the present invention provides an emitter for cold cathodes prepared by using the carbide derived carbon of the present invention.

An emitter according to this embodiment of the present invention is an emitter for cold cathodes. The emitter emits electrons by photoelectric emission, electric field emission, or the like where the electrons are generated by secondary electron emission and ion recombination subsequent to ion bombardment, rather than the electrons being generated through heating. In this embodiment, the emitter includes the carbide derived carbon according to the present invention where the carbide derived carbon has good electron emission properties. Accordingly, the emitter has good electron emission efficiency.

An electron emission device according to an embodiment of the present invention is manufactured using a method, which is not limited, including preparing a composition for forming an emitter and applying and calcinating the compositions on a substrate, or the like as follows.

First a composition for forming an emitter including the carbide derived carbon of the present invention is prepared. The composition may include further compounds for adjusting printability and viscosity of the composition while forming the emitter. The composition may include a resin and a solvent component. In addition, the composition for forming the emitter may further comprise a photosensitive resin, a photoinitiator, an adhesive component, a filler, etc.

Next, the composition for forming the emitter is applied to a substrate. The substrate on which the emitter is formed may vary according to the type of electron emission device to be formed, where the substrate to be selected should be obvious to one of ordinary skill in the art. For example, when manufacturing an electron emission device with gate electrodes between a cathode and an anode, the substrate may be the cathode.

The application of the composition for forming the emitter to the substrate may vary according to whether or not photosensitive resins are included in the composition for forming the emitter. First, additional photoresist patterns are unnecessary when the composition for forming the emitter includes photosensitive resins. That is, after coating the composition for forming the emitter including photosensitive resins on the substrate, the composition for forming the emitter is exposed and developed according to the desired emitter forming region. A photolithography process using additional photoresist patterns is required when the composition for forming the emitter does not include photosensitive resins. That is, after photoresist patterns are formed on the substrate using a photoresist film, the composition for forming the emitter is applied to the substrate on which the photoresist patterns have been formed.

The composition for forming the emitter applied to the substrate is calcinated as described above. The adhesion between the carbon-based material in the composition for forming the emitter and the substrate is increased due to the calcination. The solvents are volatilized, and other inorganic binders, etc. are melted and solidified to enhance the durability of the emitter. The calcination temperature should be determined according to the volatilization temperature and volatilization time of the vehicle included in the composition for forming the emitter. The calcination may be performed in an inert gas atmosphere in order to inhibit degradation of the carbon-based material. The inert gas may be, for example, nitrogen gas, argon gas, neon gas, xenon gas or a mixture of at least two of the aforementioned gases.

An activation process is alternatively performed for the vertical alignment and exposing of the surface of the carbon-based material, etc. According to an embodiment of the present invention, an electron emission source surface treatment material including a solution, which can be cured using heat treatment, for example, polyimide group polymer, is coated on the heat-treated resultant material described above, and the combination is then heat treated. Subsequently, the heat-treated film is delaminated. According to another embodiment of the present invention, the adhesive component is formed on the surface of a roller driven by a predetermined driving source, and the activation process is performed by applying a predetermined pressure to the surface of the heat-treated resultant material. Through this activation process, the carbide derived carbon can be exposed on the surface of the emitter or aligned vertically.

In addition, the present invention provides en electron emission device including the emitter according to the current embodiment of the present invention.

An electron emission device according to an embodiment of the present invention includes a first substrate, a cathode and an emitter formed on the first substrate, a gate electrode arranged so as to be insulated electrically from the cathode, and an insulating layer arranged between the cathode and the gate electrode to insulate the cathode from the gate electrode. Here, the emitter includes carbide derived carbon as described above.

The electron emission device may further include a second insulating layer formed on an upper surface of the gate electrode to insulate the gate electrode. In addition, various changes can be made. For example, as the gate electrode is insulated by the second insulating layer, the electron emission device may further include a focusing electrode arranged to be parallel with the gate electrode.

The emitter can be used in a vacuum electric device such as a flat display, a television, an X-ray tube, an emission gate amplifier, or the like.

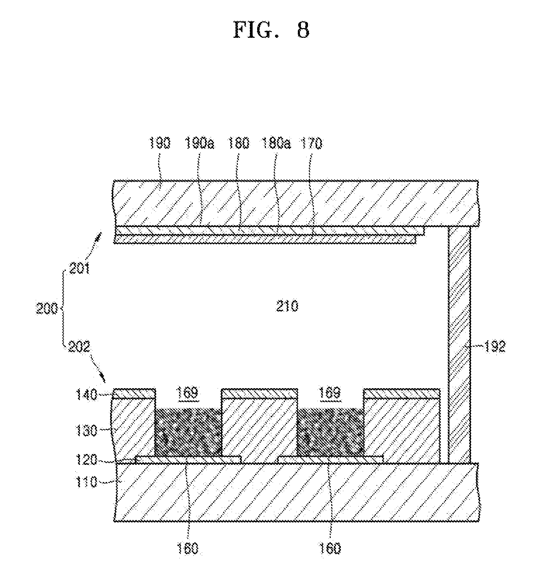

FIG. 8 is a partial cross-sectional view illustrating an electron emission device 200 according to an embodiment of the present invention. The electron emission device 200 illustrated in FIG. 8 is a triode electron emission device which is a representative electron emission device.

Referring to FIG. 8, the electron emission device 200 includes an upper plate 201 and a lower plate 202. The upper plate 201 includes an upper substrate 190, an anode electrode 180 formed on a lower surface 190a of the upper substrate 190, and a phosphor layer 170 formed on a lower surface 180a of the anode electrode 180.

The lower plate 202 includes a lower substrate 110 formed opposite the upper substrate 190 and parallel to the upper substrate 190 so that a predetermined interval or an emission space 210 is formed between the lower substrate 110 and the upper substrate 190, an elongated form cathode electrode 120 formed on the lower substrate 110, an elongated form gate electrode 140 formed to overlap the cathode electrode 120, an insulating layer 130 formed between the gate electrode 140 and the cathode electrode 120, emitter holes 169 formed next to the insulating layer 130 and gate electrode 140, and emitters 160 which are formed in the emitter holes 169 to have a height lower than that of the gate electrode 140. An electric current is supplied to the cathode electrode 120.

The emission space 210 between the upper plate 201 and the lower plate 202 is maintained in position at a pressure lower than ambient air pressure, and a spacer 192 is formed between the upper plate 201 and the lower plate 202 so as to sustain the vacuum pressure between the upper plate 201 and the lower plate 202, as well as to maintain the emission space 210.

A high voltage is applied to the anode electrode 180 to accelerate electrons emitted from the emitters 160 so that they collide with the phosphor layer 170 at high speed. The phosphor layer 170 is excited by the electrons and the phosphor layer 170 emits visible rays whereby the electrons drop from a high energy level to a low energy level. When the electron emission device 200 is a color electron emission device, phosphor layers, which emit red, green and blue light into the plurality of emission spaces 210 constituting a unit pixel, are formed on the lower surface 180a of the anode electrode 180.

The gate electrode 140 causes electrons to be easily emitted from the emitters 160. The insulating layer 130 insures the spacing of the emitter holes 169, and insulates the emitters 160 from the gate electrodes 140.

As described above, the emitters 160 include carbide derived carbon which emits electrons by forming an electric field.

Aspects of the present invention will now be described in further detail with reference to the following examples. These examples are for illustrative purposes only, and are not intended to limit the scope of the present invention.

### Preparation of carbide derived carbide derived carbon

### Example 1

First, as carbide derived carbon precursor, 100 g of particulate α-SiC with the particles having a mean diameter of 0.7 µm were prepared in a high temperature furnace composed of a graphite reaction chamber, a transformer, and the like. 0.5 1 per minute of Cl₂ gas was applied to the high temperature furnace held at 1000 ° C for 7 hours. Then, 30 g of the carbide derived carbon was prepared by extracting Si from α-SiC using a thermochemical reaction.

The carbide derived carbon was analyzed using Raman peak analysis, X-ray diffractometry and an electron microscope. The l_{G}/l_{D} ratio ranged from 0.5 through 1. A weak peak of the graphite (002) surface could be seen at 2θ = 25°. The electron diffraction pattern was a halo-pattern typical of amorphous carbon. In addition, the specific surface area of the carbide derived carbon synthesized by this method ranged from 1000 through 1100 m²/g according to the method of Brunauer, Emmett and Teller (BET method).

### Example 2

13 g of carbide derived carbon was prepared in the same manner as in Example 1 except that 100 g of particulate ZrC, with the particles having a mean diameter of 3 µm, were used as a starting carbide compound and were heat treated at 600°C for 5 hours. The carbide derived carbon was analyzed using Raman peak analysis. The I_{G}/I_{D} ratio ranged from 1 through 1.3. A weak single peak of the graphite (002) surface could be seen at 2θ = 25° using the X-ray diffractometry. In addition, the specific surface area of the carbide derived carbon synthesized by this method was 1200 m²/g according to the BET method.

### Example 3

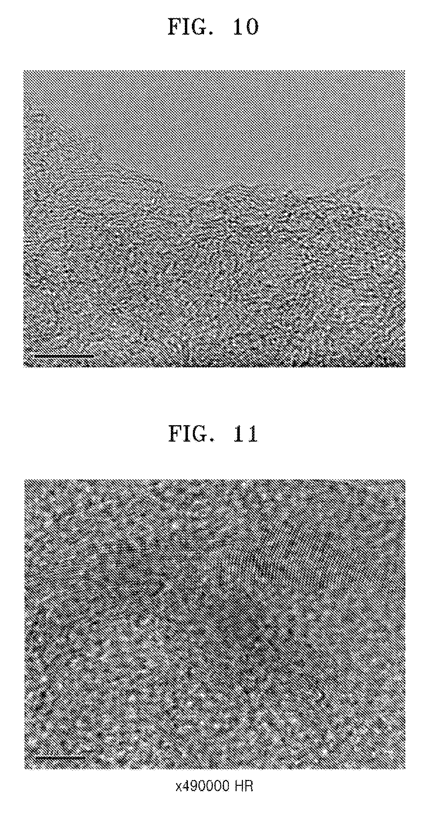

25 g of carbide derived carbon was prepared in the same manner as in Example 1 except that 100 g of particulate Al₄C₃, with the particles having a mean diameter of 3 µm, were used as a starting carbide compound and were heat treated at 700°C for 5 hours. The carbide derived carbon was analyzed using Raman peak analysis and X-ray diffractometry. The I_{G}/I_{D} ratio ranged from 1 through 3.2. A weak single peak of the graphite (002) surface was seen at 2θ = 25°. The carbide derived carbon was analyzed using high resolution TEM. Many graphite fringes could be seen, as illustrated in FIGs. 10 and 11. In addition, the specific surface area of the carbide derived carbon synthesized by this method ranged from 1050 through 1100 m²/g according to the BET method.

### Example 4

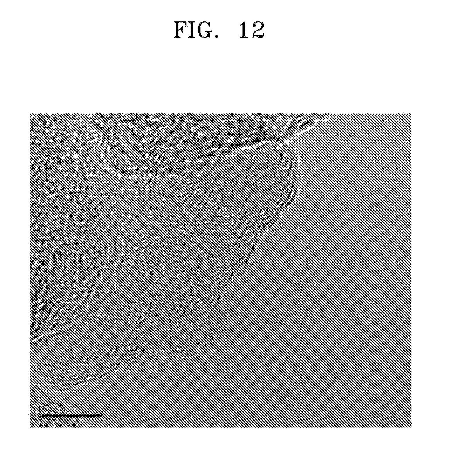

Carbide derived carbon was prepared in the same manner as in Example 1 except that 100 g of particulate B₄C, with the particles having a mean diameter of 0.8 µm, were used as a starting carbide compound and were heat treated at 1000°C for 3 hours. The carbide derived carbon was analyzed using Raman peak analysis and X-ray diffractometry. The I_{G}/I_{D} ratio ranged from 0.4 through 1. A weak peak of the graphite (002) surface could be seen at 2θ = 25°. The carbide derived carbon was analyzed using high resolution TEM. It could be seen that an amorphous open pore was changed to a graphite fringe, as illustrated in FIG. 12. In addition, the surface area of the carbide derived carbon synthesized by this method was 1310 m²/g according to the BET method.

### Comparative example 1

Carbide derived carbon was prepared in the same manner as in Example 1 except that particles of β-SiC having a fiber shape were used as a starting carbide material. The carbide derived carbon was analyzed using Raman peak analysis. The I_{G}/I_{D} ratio ranged from 0.5 through 0.8. The diameter of the carbide derived carbon particles was about 200 nm or more. Here, the carbide derived carbon particles were not vertically aligned because of the large diameter. As a result, an electric field emission measurement of the carbide derived carbon could not be obtained.

### Comparative example 2

5.5 g of carbide derived carbon was prepared in the same manner as in Example 1 except that 100 g of particulate MoC, with the particles having a mean diameter of 40 µm, were used as the starting carbide material. The carbide derived carbon was analyzed using Raman peak analysis. The l_{G}/l_{D} ratio ranged from 0.3 through 0.8. The surface area of the carbide derived carbon was 800 m²/g according to the BET method, that is, less than the range of 1000 to 1310 m²/g as found in Examples 1-4.

### Comparative example 3

21 g of carbide derived carbon was prepared in the same manner as in Example 1 except that B₄C, that is, the starting material used in Example 4, was used and the synthesizing temperature and reaction time were 1300°C and 12 hours, respectively. The carbide derived carbon was analyzed using Raman peak analysis and X-ray diffractometry. The I_{G}/I_{D} ratio ranged from 6 through 7. A narrow peak of the graphite (002) surface was seen at 2θ = 25°. In addition, the specific surface area of the carbide derived carbon was 400 m²/g, markedly less than that of Examples 1 through 4.

Table 1 shows the main properties of the carbide derived carbon of Examples 1 through 4 and Comparative Examples 1 through 3.

**Table 1**

| | Example 1 | Example 2 | Example 3 | Example 4 | Comparative Example 1 | Comparative Example 2 | Comparative Example 3 |
|---|---|---|---|---|---|---|---|
| Starting carbide compound | α-SiC | ZrC | Al₄C₃ | B₄C | β-SiC having a fiber type | MoC | B₄C |
| Diameter of Particle (µm) | 0.7 | 3 | 1 to 5 | 0.8 | 200 nm | 40 | 0.8 |
| Crystal system | hexagonal | cubic (Isometric) | trigonal | trigonal | cubic | orthorhombic | trigonal |
| Main bond | covalent | ionic | covalent | covalent | ionic | ionic | covalent |
| Reaction temperature (° C) | 1000 | 600 | 700 | 1000 | 1000 | 1000 | 1300 |
| Synthesizing time (hour) | 7 | 5 | 5 | 3 | 7 | 7 | 12 |
| diameter of openings (nm) | 0.7 | 0.6 to 1.2 | 1.5 | 4.0 | 0.7 | 4.0 | 4.0 |
| Specific Surface area of carbide derived carbon according to BET method (m²/g) | 1000 to 1100 | 1200 | 1050 | 1310 | 1100 | 800 | 400 |
| Isothermal nitrogen adsorption type 1) | I | I | I | IV | I | IV | IV |
| Volume of openings (cm³) | 0.58 | 0.64 | 0.86 | 0.75 | 0.55 | 0.54 | 0.77 |
| reaction yield of carbide derived carbon (%) | 29.8 | 13 | 25 | 20.8 | 29.8 | 5.5 | 21 |
| l_{G}/l_{D} ratio | 0.5 to 1 | 1 to 1.3 | 1 to 3.2 | 0.4 to 1 | 0.5 to 0.8 | 0.3 to 0.8 | 6 to 7 |
| Turn-on electric field _{(V/µm)}2) | 5 to 8 @1/500 duty ratio | 6 to 8@1/140 duty ratio | 7 to 10@1/140 duty ratio | 10 to13@1/50 0 duty ratio | No emission | No emission | No emission |
| Electric field emission properties | 100µA/cm² @10 to @10 to 13V/µm | 100µA/cm² @ 11 to @11 to 14V/µm | 100µA/cm² @12 to 15V/µm | 100µA/cm² @13 to 16V/µm | - | - | - |

| | | | | | | | |
|---|---|---|---|---|---|---|---|
| 1) In type I adsorption occurs regardless of the pressure of the nitrogen. The adsorption is great and adsorption occurs at a specific point. In type IV the capillary phenomenon at the middle opening and the separation curve is higher than the adsorption curve regardless of the relative pressure. 2) Electrons are not emitted at a 1/500 duty ratio, but are emitted at a 1/140 duty ratio. | | | | | | | |

If one analyzes the physical properties and electric field emission properties of the carbide derived carbon of Examples 1 through 4 and Comparative Examples 1 through 3, one sees similar Raman l_{G}/l_{D} ratios, XRD patterns and TEM morphologies, but differences in electron emission performance. Although carbide derived carbon is synthesized under similar synthesizing conditions, differing only according to the kinds of starting materials, since the distances between carbon and carbon, the distribution of crystalloids, and the diameters and volumes of openings of the amorphous material resulting from the synthesized carbide derived carbon , different electric field emission properties can be seen. However, carbonaceous materials in which electric field emission can occur at a greater than 1/140 duty ratio include carbide derived carbon whose intensity ratios of the graphite G band at 1590 cm⁻¹ to a disordered-induced D band at 1350 cm⁻¹ are in the range of 0.3 through 5 when the carbide derived carbon is analyzed using Raman peak analysis, where the carbon has a specific surface area of 1000 m² /g and more, where the carbide derived carbon exhibits a weak or wide single peak of the graphite (002) surface at 2θ = 25° when analyzing the carbide derived carbon using X-ray diffractometry and where the electron diffraction pattern of the carbide derived carbon exhibits the halo-pattern typical of amorphous carbon when the carbide derived carbon is analyzed using electron microscopy.

### Preparation of emitter and manufacture of electron emission device

Compositions containing 1 g each respectively of the carbide derived carbon prepared in Examples 1 through 4 and Comparative Examples 1 through 3were mixed with 6.5g of an acrylate binder, 5.5 g of ethoxylate trimethylolpropane triacrylate, 5.5 g of TEXANOL^{®} (Eastman Chemical Co.), 1 g of a photoinitiator and 1 g of di-octylphthalate as a plasticizer. The mixtures were then dispersed using a 3-roll mill until a well-mixed composition for forming an emitter was obtained (for example, the milling was repeated 8 times). Screen printing was used to apply the obtained compositions to a transparent glass substrate on which an indium-tin oxide (ITO) electrode (10 x 10 mm) was coated on top of the mixture, and the compositions were exposed to UV (at 500mJ) and developed. Next, the resulting products were first calcinated under a nitrogen atmosphere at 450°C, and were then activated to form cold cathodes for measuring IV. The electron emission devices were manufactured using the emitters as cold cathodes, polyethylene terephthalate film having a thickness of 100 µm as spacers and copper plates as anode plates.

### Estimation of performance of electron emission device

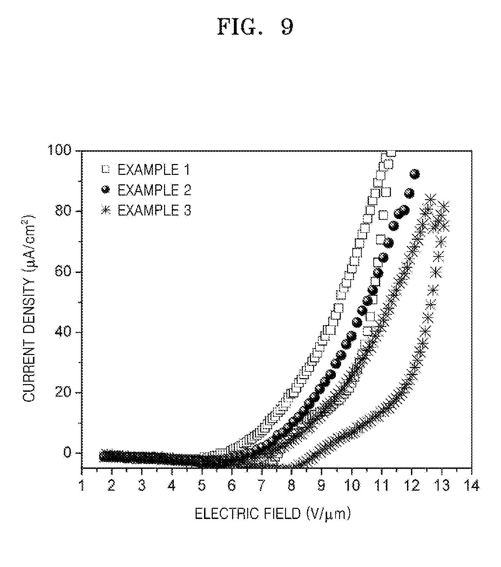

The emission current densities of the manufactured electron emission devices were measured by applying a pulse voltage at a duty ratio having a pulse width of 20 µs and a frequency of 100 Hz (duty ratio of 1/500). For Example 1, the electron emission device turned on at a field ranging from 5.8 through 7.5 V/µm and demonstrated superior electron emission performance by reaching a current density of 100 µA/cm² at a field of about 11.2 V/µm, as illustrated in FIG. 9.

Similar measurements of performance were obtained with respect to the other carbide derived carbon samples and are summarized in Table 1

As described above, an emitter has good uniformity and a long lifetime. An emitter can be prepared using a more inexpensive method than that used to manufacture conventional carbon nanotubes.

## Claims

1. A carbide derived carbon for an emitter of an electron emission device prepared by
providing a carbide material in a reactor; and
feeding a halogen containing gas into the reactor and thereby thermochemically reacting the carbide material with the halogen containing gas to extract all the atoms of the carbide material except carbon atoms, wherein
(i) in Raman peak analysis the intensity ratio of a graphite G band at 1590 cm⁻¹ to a disordered-induced D band at 1350 cm⁻¹ of the carbide derived carbon is in the range of 0.3 through 5; and/or
(ii) a surface area of the carbide derived carbon analyzed by the BET method is 1000 m²/g or more; and/or
(iii) in X-ray diffractometry a carbon crystal structure of the carbide derived carbon has a weak peak or wide single peak of a graphite (002) surface at 2θ = 25°; and/or
(iv) in electron microscopy an electron diffraction pattern of the carbide derived carbon is a halo pattern of amorphous carbon.

2. The carbide derived carbon of claim 1, wherein
(i) in Raman peak analysis the intensity ratio of a graphite G band at 1590 cm⁻¹ to a disordered-induced D band at 1350 cm⁻¹ of the carbide derived carbon is in the range of 0.3 through 5; and
(ii) a surface area of the carbide derived carbon analyzed by the BET method is 1000 m²/g or more; and
(iii) in X-ray diffractometry a carbon crystal structure of the carbide derived carbon has a weak peak or wide single peak of a graphite (002) surface at 2θ = 25°; and
(iv) in electron microscopy an electron diffraction pattern of the carbide derived carbon is a halo pattern of amorphous carbon.

3. The carbide derived carbon of claim 1 or 2, wherein the carbide material is a carbide compound of group II, III, IV, V, or VI elements.

4. The carbide derived carbon of any of the preceding claims, wherein the carbide material is at least one compound selected from the group consisting of silicon carbide, boron carbide, titanium carbide, zirconium carbide, aluminum carbide, calcium carbide, titanium tantalum carbide, molybdenum tungsten carbide, titanium nitride carbide and zirconium nitride carbide.

5. The carbide derived carbon of any of the preceding claims, wherein the halogen containing gas is Cl₂, TiCl₄ or F₂

6. A method of preparing carbide derived carbon for an emitter of an electron emission device, the method comprising the steps of:
providing a carbide material in a reactor; and
feeding a halogen containing gas into the reactor and thereby thermochemically reacting the carbide material with the halogen containing gas to extract all the atoms of the carbide material except carbon atoms until
(i) in Raman peak analysis the intensity ratio of a graphite G band at 1590 cm⁻¹ to a disordered-induced D band at 1350 cm⁻¹ of the carbide derived carbon is in the range of 0.3 through 5; and/or
(ii) a surface area of the carbide derived carbon analyzed by the BET method is 1000 m²/g or more; and/or
(iii) in X-ray diffractometry a carbon crystal structure of the carbide derived carbon has a weak peak or wide single peak of a graphite (002) surface at 2θ = 25°; and/or
(iv) in electron microscopy an electron diffraction pattern of the carbide derived carbon is a halo pattern of amorphous carbon.

7. The method of claim 6, wherein feeding the halogen containing gas into the reactor and thereby thermochemically reacting the carbide material with the halogen containing gas to extract all the atoms of the carbide material except carbon atoms is maintained until
(i) in Raman peak analysis the intensity ratio of a graphite G band at 1590 cm⁻¹ to a disordered-induced D band at 1350 cm⁻¹ of the carbide derived carbon is in the range of 0.3 through 5; and
(ii) a surface area of the carbide derived carbon analyzed by the BET method is 1000 m²/g or more; and
(iii) in X-ray diffractometry a carbon crystal structure of the carbide derived carbon has a weak peak or wide single peak of a graphite (002) surface at 2θ = 25°; and
(iv) in electron microscopy an electron diffraction pattern of the carbide derived carbon is a halo pattern of amorphous carbon.

8. The method of claim 6 or 7, wherein the carbide material is a carbide compound of group II, III, IV, V, or VI elements.

9. The method of any of claims 6 to 8, wherein the carbide material is at least one compound selected from the group consisting of silicon carbide, boron carbide, titanium carbide, zirconium carbide, aluminum carbide, calcium carbide, titanium tantalum carbide, molybdenum tungsten carbide, titanium nitride carbide and zirconium nitride carbide.

10. The method of any of claims 6 to 9, wherein the halogen containing gas is Cl₂, TiCl₄ or F₂.

11. An emitter for cold cathodes of an electron emission device made of the carbide derived carbon of any of claims 1 to 5.

12. An electron emission device comprising the emitter of claim 11.
